# EUROPEAN PATENT SPECIFICATION

(11) **EP 4 181 737 B1**
(45) Date of publication and mention of the grant of the patent: **05.03.2025**
(21) Application number: 21739702.5
(22) Date of filing: 07.07.2021
(51) Int. Cl.: D21H 17/33, D21H 17/60, D21H 17/68, D21H 21/18, A47G 21/18, D21H 21/16, B31D 5/00

(54) **PAPER DRINKING STRAW, BEVERAGE CONTAINER, AND METHOD FOR PRODUCING THE PAPER DRINKING STRAW**
PAPIERTRINKHALM UND GETRÄNKEBEHÄLTER
PAILLE EN PAPIER ET RÉCIPIENT DE BOISSON

(30) Priority: 20.07.2020 EP 20186740
(43) Date of publication of application: 24.05.2023
(73) Proprietor: Capri Sun AG, 6300 Zug (CH)
(72) Inventor: KORBMANN, Andreas, 69214 Eppelheim (DE); SCHEHL, Beatus, 69214 Eppelheim (DE); SCHWARTZ, Erhard, 69168 Wiesloch (DE)
(74) Representative: Grünecker Patent- und Rechtsanwälte PartG mbB
(86) International application number: PCT/EP2021/068878
(87) International publication number: WO 2022/017802

(56) References cited:
- EP-A1- 3 581 071
- CN-A- 109 463 964
- US-A1- 2006 255 507
- US-A1- 2019 313 819
- US-A1- 2019 380 520

## Description

The present invention refers to a paper drinking straw according to the preamble of claim 1, a beverage container according to claim 8, and a method for producing a paper drinking straw according to claim 9.

### Prior art

GB 2579107 A discloses a paper drinking straw with a first and a second paper layer each comprising an inner and an outer surface. A paper core layer comprises a first and a second surface. The inner surface of the first paper layer is bonded to the first surface of the paper core layer, and the inner surface of the second paper layer is bonded to the second surface of the paper core layer. At least the outer surfaces of the first and second paper layer are coated with a water-resistant barrier coating that may comprise a styrene free acrylic based coating, a styrene-based coating, a polymer dispersion coating, modified starch, vegetable oil, or a natural wax. The coating may be applied using a water-based dispersion coating method.

EP 3 581 071 A1 discloses a coated paper straw being rolled into a tube from a sheet. The sheet is a coated paper strip comprising a coated paper with one or two waterproof coating layers. The paper straw has an interface edge that is joined by overlapping portions of two sides of the coated paper strip along the longitudinal direction. The coating layer is at least located on the exterior side of the paper straw, and may be made of a biodegradable coated resin.

US 2019/0343312 A1 discloses a straw according to the preamble of claim 1.

It is known that for producing paper drinking straws, several paper layers that may be coated with adhesive are helically or horizontally wound and finally stuck together.

For example, WO 2020/099360 A1 discloses a system and a method for producing lengths of tube, wherein strips are supplied with a strip supplying device to a winding device and are helically wound around a mandrel to form a base tube moving away from the mandrel at a tube speed. A selection of at least one of the strips is placed with a contact side thereof in direct contact with the mandrel during the winding, wherein the at least one strip of the selection is moved along a lubrication device to apply a layer of lubrication material on the contact side of the at least one strip before the at least one strip is wound around the mandrel. The base tube may be cut at a predetermined length with a cutting device while the base tube is moving in a tube direction at the tube speed.

In order to enable the penetration of a paper drinking straw into a penetration opening of a beverage container one end of the paper drinking straw is provided with a slant for forming a bevelled tip. However, the bevelled tip reduces the stability of the paper drinking straw in the area of the tip. Thus, by a light touch or by applying a pressure, the tip may fold over or may kink. Consequently, penetrating the paper drinking straw with the tip into the penetration opening of a beverage container may be hindered or may even be impossible.

### Object

The invention thus has the object to provide a paper drinking straw and a beverage container with the paper drinking straw, the paper drinking straw being ecologically safe and providing satisfactory stability.

### Solution

This object is solved by the paper drinking straw of claim 1 and the beverage container of claim 8, and the method for producing a paper drinking straw of claim 9. Additional embodiments and improvements are disclosed in the dependent claims.

The paper drinking straw for a beverage container comprises a paper tube with a first end and a second end. At least one impregnated region of the paper tube is impregnated with an impregnation agent and at least one region of the paper tube is not impregnated with the impregnation agent.

The impregnation of the at least one impregnated region of the paper tube may increase the stability of this region. Thus, also the stability of the paper drinking straw as a whole may be increased. The at least one region not being impregnated with the impregnation agent also is not impregnated with any other king of impregnation agent. This may apply for all the various embodiments and examples of paper drinking straws mentioned throughout this application.

The impregnation agent may penetrate into pores and spaces between fibres of the paper. Additionally, the impregnation agent may penetrate at least partially into fibres of the paper.

The at least one impregnated region may comprise a first impregnated region starting form a second end of the paper tube and extending towards the first end of the paper tube and being impregnated with the impregnation agent. Exemplarily the first impregnated region may extend for less than 80% or 90% of a total length of the paper tube.

The word "first" is being used to distinguish the different regions mentioned. It has no further limiting meaning. The first impregnated region may be the only impregnated region of the paper tube, or the paper tube may comprise one or more additional impregnated regions; as long as at least one region of the paper tube is not impregnated with the impregnation agent.

The at least one impregnated region may comprise a second impregnated region starting at a distance from a second end of the paper tube and extending as an annular ring towards the first end of the paper tube and being impregnated with the impregnation agent. Exemplarily the annular ring may have a width of 10% to 25% of a total length of the paper tube. Exemplarily the distance may be 20% to 50% of the total length of the paper tube.

The word "second" is being used to distinguish the different regions mentioned. It has no further limiting meaning. The second impregnated region may be the only impregnated region of the paper tube, or the paper tube may comprise one or more additional impregnated regions; as long as at least one region of the paper tube is not impregnated with the impregnation agent.

The at least one impregnated region may comprise a third impregnated region starting form the first end of the paper tube and extending towards the second end of the paper tube and being impregnated with the impregnation agent, wherein exemplarily the third impregnated region extends for less than 80% or 90% of a total length of the paper tube.

The word "third" is being used to distinguish the different regions mentioned. It has no further limiting meaning. The third impregnated region may be the only impregnated region of the paper tube, or the paper tube may comprise one or more additional impregnated regions; as long as at least one region of the paper tube is not impregnated with the impregnation agent.

Starting from the second end of the paper tube 70%, 80%, 90%, or 100% of a total length of the paper tube may not be impregnated with the impregnation agent, wherein when starting from the second end of the paper tube 100% of the total length of the paper tube are not impregnated with the impregnation agent a cutting edge at the first end of the paper tube is impregnated with the impregnation agent. When 100% of the total length of the paper tube are not impregnated, e.g., the cutting edge of the bevelled tip may be impregnated.

The impregnation agent may comprise one or more of silicate, polymer, resin (artificial or natural), wax (artificial or natural), adhesive, latex, also casein glue or shellac.

The impregnation agent may comprise sodium silicate. For example, sodium silicate may be used that comprises an aqueous solution of glasslike and water soluble sodium silicate that has solidified from a melting. Drying of the aqueous solution of sodium silicate starts with evaporation of the water and leads to creation of water-insoluble silica, thus leading to silification. The silification is irreversible.

The sodium silicate may comprise SiO₂3.3/3.5Na₂O, e.g., with 27.5% to 28.5% SiO₂ and 8.1% to 8.5% Na₂O.

The paper tube may comprise a winded paper layer, wherein the impregnation agent may only have been applied to an exposed surface of the paper tube. The exposed surface may comprise an outer surface and/or an inner surface and/or a cutting edge of the paper tube.

The paper tube can comprise a paper layer of several layers of paper. The several layers of paper may be glued together. Cutting edges and interspaces may be sealed. Sealing may take place before impregnating the bevelled tip. The width and the thickness, e.g., in grams per square metre, may be different for the several layers.

The first end of the paper tube comprises a bevelled tip and the second end of the paper tube can comprise a straight end. The bevelled tip may be produced by an oblique cut of a paper tube. A cutting edge at the first end may extend with an angle to the longitudinal axis of the paper tube between 20° to 75°. For example, the angle may lay in a region between 30° ± 5° or in a region between 45° ± 5°. For measuring and/or determining the angle, a plane in that the cutting edge lies may be defined and the angle extending between this plane and the longitudinal axis of the paper tube may be measured and/or determined.

The bevelled tip is at least partially impregnated with an impregnation agent. The impregnation of at least part of the bevelled tip improves its hardness and stability such that folding over or kinking of the bevelled tip can be prevented and a reliable penetration of the bevelled tip into the beverage container is possible.

Moreover, capillary action at the cutting edge of the bevelled tip can be reduced as penetration of the liquid provided in the beverage container may be prevented or strongly reduced.

The cutting edge of the bevelled tip can be impregnated with the impregnation agent. Starting from the cutting edge, a depth of at least 0,5 mm, 1 mm, or 1,5 mm can be impregnated with the impregnation agent. When the depth of at least 0,5 mm, 1 mm, or 1,5 mm is impregnated with the impregnation agent, pores, space, and the like between the fibres of the paper of the paper drinking straw and/or the fibres of the paper of the paper drinking straw may comprise the impregnation agent.

A cutting edge of the bevelled tip being impregnated with the impregnation agent can be achieved when during a production process of the paper drinking straw, the bevelled tip is produced first and then, afterwards, the impregnation agent is provided to the bevelled tip. Like that, the bevelled tip can be at least partially impregnated with impregnation agent and additionally the cutting edge of the bevelled tip can be impregnated with the impregnation agent.

The paper may comprise at least one of: wood fibres, bamboo fibres, bagasse fibres, seaweed fibres, fibres of banana plant, fibres of Abaca plant, synthetic fibres, polymer-based fibres, plastic fibres.

For producing the paper drinking straw, first the paper tube may be produced and the bevelled tip may be provided. Only after that, the bevelled tip is at least partly impregnated. Thus, the at least one paper layer, or at least some part of the at least one paper layer for producing the paper tube does not have to be impregnated and/or has to comprise impregnation agent before the paper tube is produced and before the bevelled tip is provided.

At least an are impregnated with and/or an outer surface of the paper tube and/or a cutting edge of the bevelled tip may be impregnated with the impregnation agent. Alternatively or additionally, the cutting edge of the bevelled tip may be impregnated partially or completely.

Regions aside of the bevelled tip may not impregnated with the impregnation agent. Thus, the required amount of impregnation agent may be reduced. An impregnation of the total paper drinking straw may not be required as long as the bevelled tip is at least partially impregnated.

The bevelled tip may be at least partially impregnated with an impregnation agent only after providing the bevelled tip. Impregnating the bevelled tip with the impregnation agent only after providing the bevelled tip may result in a penetration of the impregnation agent into pores and spaces between fibres of the paper also with an origin at the cutting edge of the bevelled tip. Additionally, the impregnation agent may penetrate at least partially into fibres of the paper also with an origin at the cutting edge of the bevelled tip.

For all embodiments above and below the impregnation agent can be provided on the paper drinking straw by spraying it onto the paper drinking straw or by dipping the paper drinking straw into a liquid impregnation agent. After dipping it into the impregnation agent, air or any other gas may be used to blow of superfluous impregnation agent. The spraying can be performed by means of a nozzle that ejects the impregnation agent onto the region of the paper drinking straw that is to be impregnated. After application of the impregnation agent by spraying or by dipping the impregnation agent may be caused to solidify by hardening it (e.g. in case of a resin) or by drying it (e.g. in case of a silicate).

Alternatively, the impregnation agent can be applied by bringing the paper drinking straw in contact with a material that is soaked with the impregnation agent such as a sponge or tissue or felt to thereby provide the agent to the paper drinking straw.

Also, the impregnation agent can be applied to a cutting knife such that the agent is transferred to the cutting edge at the same time as the bevelled edge is prepared.

The beverage container for receiving liquid product comprises a penetration opening for introducing a paper drinking straw as described above or below, and the paper drinking straw. The paper drinking straw may be provided in a hygienic packaging. The hygienic packaging may be at least partially attached to the beverage container in a stable manner; it may be stuck to it and/or it may be removable from it. The paper drinking straw can be removed from the hygienic packing, wherein the hygienic packing may be still attached to the beverage container or may have been taken off the beverage container.

The beverage container can be designed as a beverage carton, as a foil bag or as a stand-up pouch.

The method for producing a paper drinking straw according to one of the embodiments and/or examples described above or below comprises:
providing a raw paper tube;
cutting through the raw paper tube, thereby producing the paper tube with the first end and the second end; and
then impregnating the at least one impregnated region with the impregnation agent and not impregnating the at least one region of the paper tube with the impregnation agent.

The impregnating the at least one impregnated region can comprise:
- impregnating a first impregnated region starting form the second end of the paper tube and extending towards the first end of the paper tube with the impregnation agent, wherein exemplarily the first impregnated region extends for less than 80% or 90% of a total length of the paper tube, and/or
- impregnating a second impregnated region starting at a distance from a second end of the paper tube and extending as an annular ring towards the first end of the paper tube with the impregnation agent, wherein exemplarily the annular ring has a width of 10% to 25% of a total length of the paper tube, wherein exemplarily the distance is 20% to 50% of the total length of the paper tube, and/or
- impregnating a third impregnated region starting form the first end of the paper tube and extending towards the second end of the paper tube with the impregnation agent, wherein exemplarily the third impregnated region extends for less than 80% or 90% of a total length of the paper tube.

The impregnating the at least one impregnated region can comprise further or additionally:
- impregnating a cutting edge at the first end of the paper tube with the impregnation agent.

The cutting through can be a straight cutting resulting that the first end comprises a straight first end.

Alternatively, the cutting through being an oblique cutting resulting that the first end comprises a bevelled tip.

The method can further comprise at least partially impregnating the bevelled tip with the impregnation agent.

The method can further comprise impregnating at least an inner surface and/or an outer surface and/or a cutting edge of the bevelled tip with the impregnation agent.

The method can further comprise not impregnating regions aside of the bevelled tip with the impregnation agent.

The method can further comprise impregnating the bevelled tip at least partially with the impregnation agent only after providing the bevelled tip.

The cutting can be done with a cutting knife, wherein the impregnation agent can be applied to the cutting knife and wherein the impregnation agent can be transferred to the cutting edge during the cutting of the raw paper straw.

The method can further comprise solidifying the impregnation agent by hardening or drying, wherein exemplarily solidifying the impregnation agent of the at least partially impregnated bevelled tip and/or solidifying the impregnation agent of the first impregnated region and/or solidifying the impregnation agent of the second region and/or solidifying the impregnation agent of the cutting edge by hardening or drying can be performed at the same time or at at least two different times.

### Brief description of the figures

The attached figures illustrate exemplified for better understanding and for visualisation aspects and embodiments of the invention.
Figures 1A, 1B illustrate inclined views from below on different states of a paper tube with horizontal winding,
Figure 1C illustrates a side view on the paper tube of Figure 1B,
Figures 2A, 2B illustrate inclined views from below on different states of a paper tube with helically winding,
Figure 2C illustrates a side view on the paper tube of Figure 2B,
Figures 3A, 3B, 3C, 3D, 3E, 3F, 3G illustrate schematically different embodiments of paper drinking straws where different parts are impregnated with an impregnating agent,
Figure 4 illustrates a cross section of a paper drinking straw comprising three paper layers,
Figure 5A illustrates an inclined view from the top on a beverage carton with inserted paper drinking straw of the second embodiment,
Figure 5B illustrates an inclined view from the top on a foil bag with an inserted drinking straw of the second embodiment,
Figure 5C illustrates an inclined view from the top on the beverage carton with inserted paper drinking straw of the fifth embodiment,
Figure 5D illustrates an inclined view from the top on the foil bag with an inserted drinking straw of the sixth embodiment,
Figure 5E illustrates an inclined view from the top on the beverage carton with inserted paper drinking straw of the seventh embodiment,
Figure 6 illustrates an inclined view from below on a paper drinking straw not forming part of the invention before impregnating comprising a paper tube with horizontal winding, and two straight ends,
Figure 7 illustrates an inclined view from below on a paper drinking straw not forming part of the invention before impregnating comprising a paper tube with helically winding, and two straight ends,
Figures 8A, 8B, 8C, 8D illustrate schematically different examples of paper drinking straws with two straight ends not forming part of the invention where different parts are impregnated with an impregnating agent,
Figure 9A illustrates an inclined view from above on the beverage carton with the inserted paper drinking straw of Figure 8C, and
Figure 9B illustrates an inclined view from above on the foil bag with the inserted paper drinking straw of Figure 8B.

### Detailed description of the figures

The following figures disclose embodiments being related to paper drinking straws comprising one straight end and a bevelled tip at the other end.

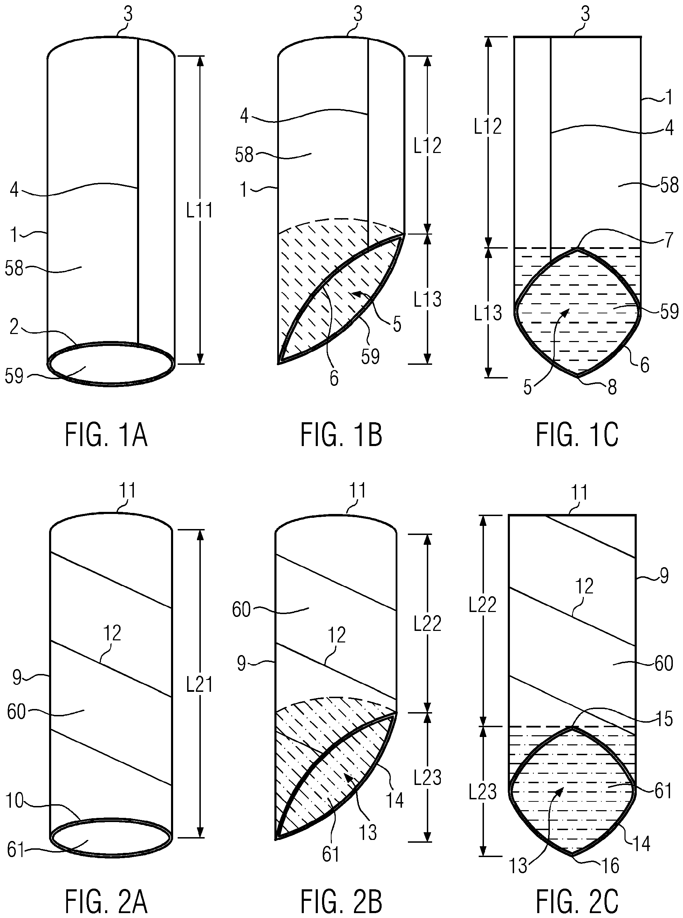

Figure 1A illustrates an inclined view from below of a paper tube 1 with a total length L11 that might have been cut from an endless paper tube, wherein the endless paper tube has been produced by horizontal winding of at least one paper layer. The paper tube 1 comprises a first end 2 and a second end 3. Moreover, a connection edge 4 is depicted, where edges of the at least one paper layer firmly adjoin and that extends in a longitudinal direction. The paper tube 1, and thus the paper drinking straw produced from it, comprises an inner surface 59 pointing to the interior of the paper tube 1, and an outer surface 58 pointing to the exterior of the paper tube 1.

By applying a physical oblique cut that starts at a starting point in a distance L13 from the first end 2 of the paper tube 1, a bevelled tip 5 with a cutting edge 6 is provided (see Fig. 1B). The paper tube of Fig. 1B may also be obtained by applying an oblique cut to a paper tube of the length L12 plus L11, which cuts the tube into two equal parts, one of which is shown in Fig. 1B. The remaining length L12 of the paper tube 1 above the oblique cut amounts to the difference of the distance L13 from the total length L11 of the paper tube 1. The part of the paper tube 1 that represents the bevelled tip 5 is indicated by the dashed region. The dashed region comprises the part of the paper tube 1 that extends between a plane, the plane being perpendicular to a longitudinal axis of the paper tube 1 and going through the starting point of the oblique cut, and the first end 2 of the paper tube 1.

Figure 1C illustrates a side view on the paper tube 1 of Figure 1B. An upper end 7 of the bevelled tip 5 and a lower end 8 of the bevelled tip 5 are illustrated. The upper end 7 may correspond to the starting point of the physical oblique cut. The lower end 8 may be used for penetrating a penetration opening of a beverage container.

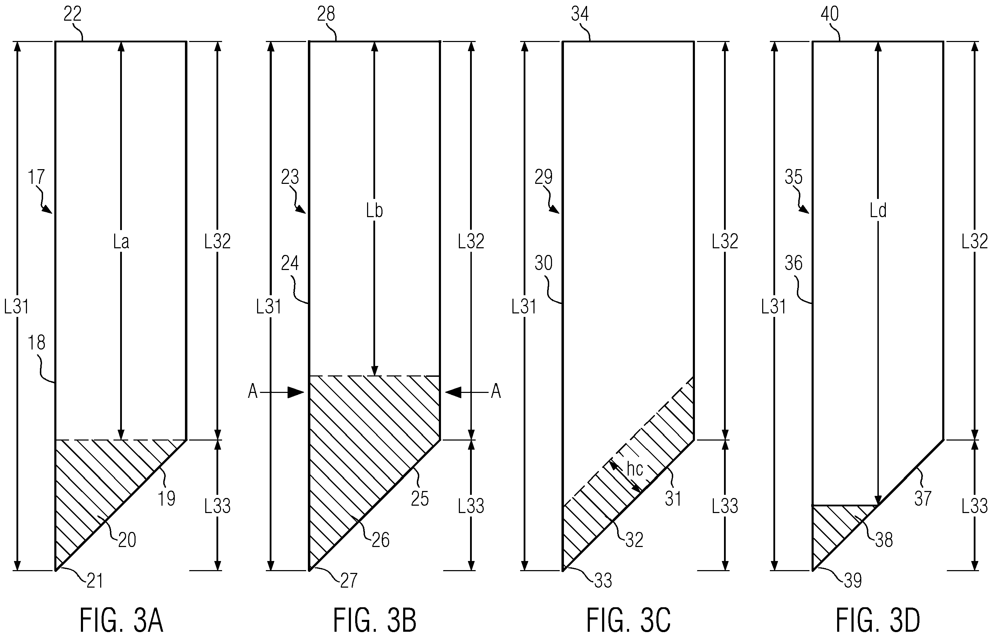

After providing the bevelled tip 5, the bevelled tip 5, a part of the bevelled tip 5, a part of the bevelled tip 5 and another part of the paper tube 1, or the bevelled tip 5 and another part of the paper tube 1 may be impregnated with an impregnation agent; see Figures 3A, 3B, 3C, 3D. It is also possible to only impregnate the cutting edge 6 of the bevelled tip 5, e.g., partially or completely. Thus, the at least one paper layer, or at least some part of the at least one paper layer for producing the paper tube 1 does not have to be impregnated and/or has to comprise impregnation agent before the paper tube 1 is produced and before the bevelled tip 5 is provided.

Figure 2A illustrates an inclined view from below of a paper tube 9 with a total length L21 that might have been cut from an endless paper tube, wherein the endless paper tube has been produced by helically winding of at least one paper layer. The paper tube 9 comprises a first end 10 and a second end 11. Moreover, a connection edge 12 where edges of the at least one paper layer firmly adjoin and that extends helically is depicted. The paper tube 9, and thus the paper drinking straw produced from it, comprises an inner surface 61 pointing to the interior of the paper tube 9, and an outer surface 60 pointing to the exterior of the paper tube 9.

By applying a physical oblique cut that starts at a starting point in a distance L23 from the first end 10 of the paper tube 9, a bevelled tip 13 with a cutting edge 14 is provided. The remaining length L22 of the paper tube 9 above the oblique cut amounts to the difference of the distance L23 from the total length L21 of the paper tube 9. The part of the paper tube 9 that represents the bevelled tip 13 is indicated by the dashed-pointed region. The dashed-pointed region comprises the part of the paper tube 9 that extends between a plane, the plane being perpendicular to a longitudinal axis of the paper tube 9 and going through the starting point of the oblique cut, and the first end 10 of the paper tube 9. The paper tube 11 as shown in Fig. 2B may also be obtained by applying an oblique cut to a paper tube of the length L22 plus L21 producing two equal parts one of which is shown in Fig. 2B.

Figure 2C illustrates a side view on the paper tube 9 of Figure 2B. An upper end 15 of the bevelled tip 13 and a lower end 16 of the bevelled tip 13 are illustrated. The upper end 15 may correspond to the starting point of the physical oblique cut. The lower end 16 may be used for penetrating a penetration opening of a beverage container.

After providing the bevelled tip 13, the bevelled tip 13, a part of the bevelled tip 13, a part of the bevelled tip 13 and another part of the paper tube 9, or the bevelled tip 13 and another part of the paper tube 9 may be impregnated with an impregnation agent; see Figures 3A, 3B, 3C, 3D. It is also possible to only impregnate the cutting edge 14 of the bevelled tip 9. Thus, the at least one paper layer, or at least some part of the at least one paper layer for producing the paper tube 9 does not have to be impregnated and/or has to comprise impregnation agent before the paper tube 9 is produced and before the bevelled tip 13 is provided.

Figure 3A illustrates a first embodiment of a paper drinking straw 17 that comprises a paper tube 18 with a bevelled tip 19 at a first end 21 of the paper tube 18; the paper tube 18 may be one of Figure 1B/1C or of Figure 2B/2C or another suitable paper tube. The paper tube 18 and thus the paper drinking straw 17 comprise a total length L31. The physical oblique cut for providing the bevelled tip 19 started at a distance L33 from the first end 21 of the paper tube 18. The length L32 of the paper tube 18 and thus of the paper drinking straw 17 above the oblique cut is the difference of the distance L33 from the total length L31 of the paper tube 18 and the paper drinking straw 17, respectively.

A region 20 in that the bevelled tip 19 has been impregnated with the impregnation agent is indicated by hatching. In the illustrated case, the impregnated region corresponds to the bevelled tip 19 and starts at a distance La from the second end 22 of the paper tube 18 and the paper drinking straw 17, respectively. The value of the distance La corresponds to the value of the length L32 above the oblique cut.

Figure 3B illustrates a second embodiment of a paper drinking straw 23 comprising a paper tube 24 with a bevelled tip 25 at the first end 27 of the paper tube 24 that also may be one of Figure 1B/1C or of Figure 2B/2C or another suitable paper tube. The total length L31, the length L32 and the distance L33 correspond to those of the first embodiment as depicted in Figure 3A.

Moreover, a region 26 in that the bevelled tip 25 has been impregnated with the impregnation agent is indicated by hatching. This region 26 starts at a distance Lb from the second end 28 of the paper tube 24. The value of the distance Lb is smaller than the value of the length L32 of the paper tube 24 and thus of the paper drinking straw 23 above the oblique cut. The impregnated region 26 thus comprises the bevelled tip 25 and another part of the paper tube 24.

Figure 3C illustrates a third embodiment of a paper drinking straw 29 comprising a paper tube 30 with a bevelled tip 31 at a first end 33 of the paper tube 30 that also may be one of Figure 1B/1C or of Figure 2B/2C or another suitable paper tube. The total length L31, the length L32 and the distance L33 correspond to those of the first embodiment as depicted in Figure 3A, and the second embodiment as depicted in Figure 3B, respectively.

Moreover, a region 32 in that part of the bevelled tip 31 has been impregnated with impregnation agent is indicated by hatching. This region 32 extends in a distance hc parallel to the cutting edge of the bevelled tip 31. The region 32 may also be not parallel to the cutting edge but inclined to it.

Figure 3D illustrates a fourth embodiment of a paper drinking straw 35 comprising a paper tube 36 with a bevelled tip 37 at the first end 39 of the paper tube 36 that also may be one of Figure 1B/1C or of Figure 2B/2C or another suitable paper tube. The total length L31, the length L32 and the distance L33 correspond to those of the first, second and third embodiments.

Moreover, a region 38 in that part of the bevelled tip 37 has been impregnated with the impregnation agent is indicated by hatching. This region 38 starts at a distance Ld from the second end 40 of the paper tube 36. The value of the distance Ld is bigger than the value of the length L32 of the paper tube 36 and thus of the paper drinking straw 35 above the oblique cut. The impregnated region 38 thus only comprises a part of the bevelled tip 37. In general, also only a part of the cutting edge may be impregnated.

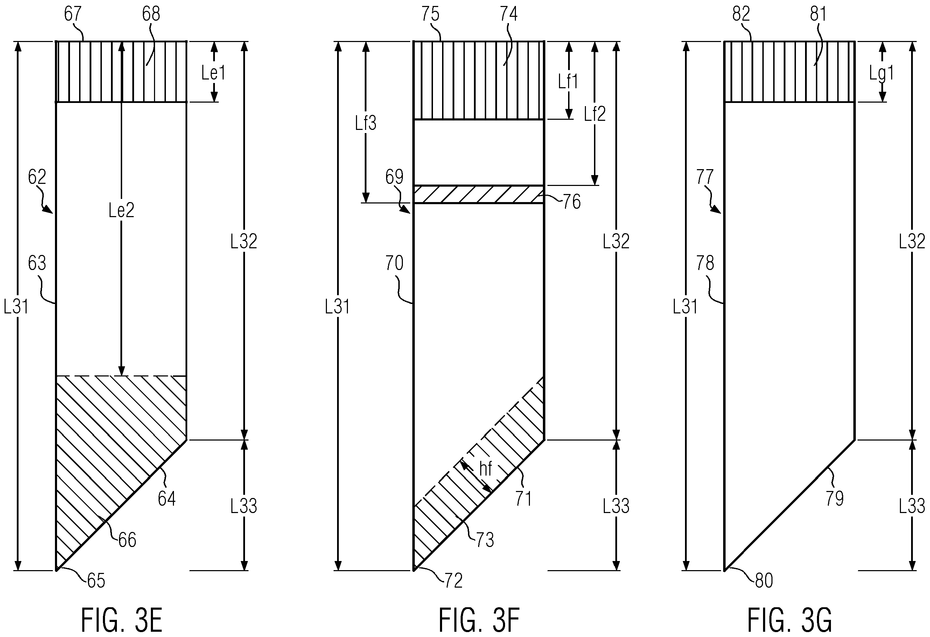

Figure 3E illustrates a fifth embodiment of a paper drinking straw 62 comprising a paper tube 63 with a bevelled tip 64 at the first end 65 of the paper tube 63. The paper tube 63 may be one of Figure 1B/1C or of Figure 2B/2C or another suitable paper tube. The total length L31, the length L32 and the distance L33 correspond to those of the first embodiment as depicted in Figure 3A.

A region 66 in that the bevelled tip 64 has been impregnated with the impregnation agent is indicated by oblique hatching. This impregnated region 66 starts at a distance Le2 from the second end 67 of the paper tube 63. The value of the distance Le2 is smaller than the value of the length L32 of the paper tube 63. The impregnated region 66 thus comprises the bevelled tip 64 and another part of the paper tube 63.

Moreover, a first impregnated region 68 starting from the second end 67 of the paper tube 63 and extending towards the first end 65 of the paper tube 63 for a length Le1 is impregnated with the impregnation agent.

Figure 3F illustrates a sixth embodiment of a paper drinking straw 69 comprising a paper tube 70 with a bevelled tip 71 at a first end 72 of the paper tube 70. Also here, the paper tube 70 may be one of Figure 1B/1C or of Figure 2B/2C or another suitable paper tube. The total length L31, the length L32 and the distance L33 correspond to those of the first embodiment as depicted in Figure 3A.

A region 73 in that part of the bevelled tip 71 has been impregnated with impregnation agent is indicated by oblique hatching. This region 73 extends in a distance hf parallel to the cutting edge of the bevelled tip 71. The region 73 may also be not parallel to the cutting edge but be inclined to it (not shown).

Moreover, a first impregnated region 74 starting from the second end 75 of the paper tube 70 and extending towards the first end 72 of the paper tube 70 for a length Lf1 is impregnated with the impregnation agent. Additionally, a second impregnated region 76 starting at a distance Lf2 from the second end 75 of the paper tube 70 and extending as an annular ring towards the first end 72 of the paper tube 70 is impregnated with the impregnation agent. The annular ring extends between a distance Lf2 and a distance Lf3 form the second end 75 of the paper tube 70.

Figure 3G illustrates a seventh embodiment of a paper drinking straw 77 comprising a paper tube 78 with a bevelled tip 79 at the first end 80 of the paper tube 78 that also may be one of Figure 1B/1C or of Figure 2B/2C or another suitable paper tube. The total length L31, the length L32 and the distance L33 correspond to those of the first embodiment as depicted in Figure 3A.

A first impregnated region 81 starting from the second end 82 of the paper tube 78 and extending towards the first end 80 of the paper tube 78 for a length Lg1 is impregnated with the impregnation agent.

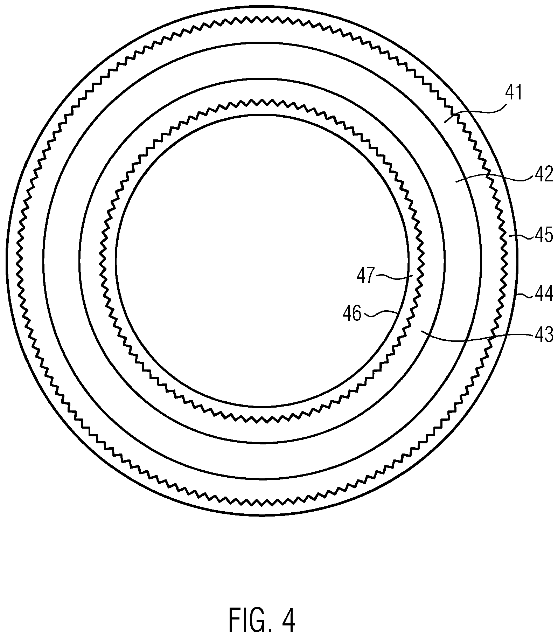

Figure 4 illustrates a cross section of a paper drinking straw comprising three paper layers, e.g., a cross section along A-A as shown in Figure 3B. A first paper layer 41 represents the outer layer, a second paper layer 42 the core paper layer, and a third paper layer 43 the inner layer. The outer surface 44 of the first paper layer 41 has been impregnated with impregnation agent and the impregnation agent also has penetrated partly into pores and spaces between fibres of the paper; this penetration region has been indicated with the reference sign 45.

The inner surface 46 of the third paper layer 43 also has been impregnated with impregnation agent and the impregnation agent has penetrated partly into pores and spaces between fibres of the paper; this penetration region has been indicated with the reference sign 47.

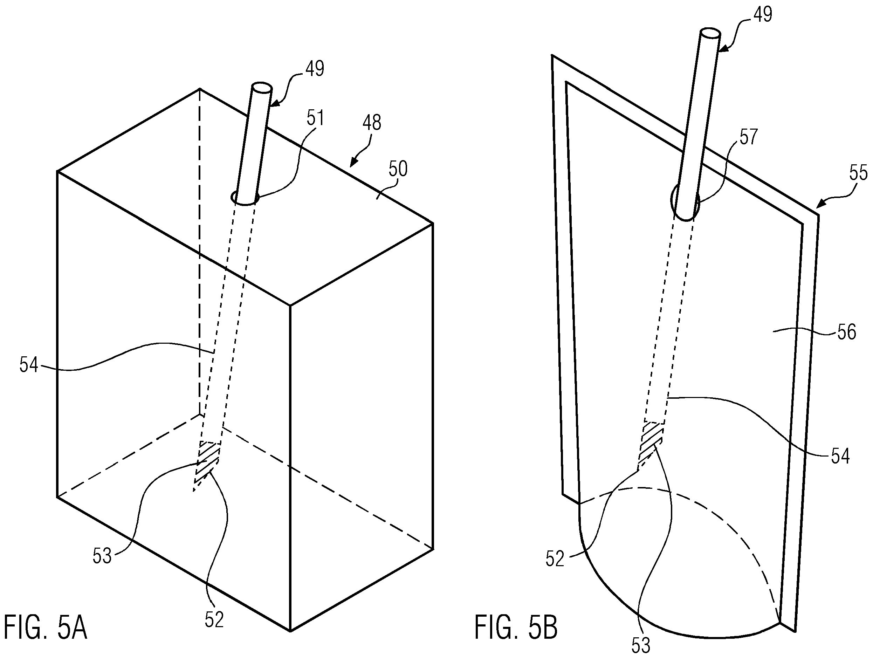

Figure 5A illustrates an inclined view from above on a beverage container 48 with an inserted paper drinking straw 49 of the second embodiment. On the top side 50 of the beverage container 48 a penetration opening 51 is provided that is closed with a foil or the like before the bevelled tip 52 of the paper drinking straw 49 penetrates the penetration opening 51. A region 53 of the bevelled tip 52 and part of the paper tube 54 is impregnated with an impregnation agent.

Figure 5B illustrates an inclined view from above of a foil bag 55 with an inserted paper drinking straw 49 of the second embodiment. On one bag side 56 of the foil bag 55 a penetration opening 57 is provided that is closed with a foil or the like before the bevelled tip 52 of the paper drinking straw 49 penetrates the penetration opening 57. The paper drinking straw 49 corresponds to the one of Figure 5A.

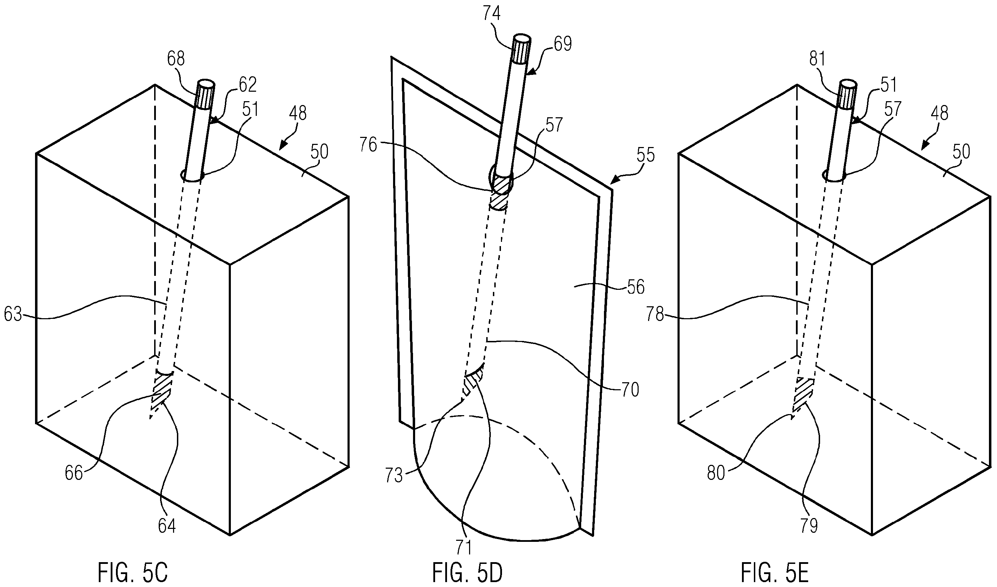

Figure 5C illustrates an inclined view from the top on the beverage container 48 with an inserted paper drinking straw 62 of the fifth embodiment. On the top side 50 of the beverage container 48 a penetration opening 51 is provided that is closed with a foil or the like before the bevelled tip 64 of the paper drinking straw 62 penetrates the penetration opening 51. The region 66 of the bevelled tip 64 and part of the paper tube 63 are impregnated with the impregnation agent. Additionally, the first region 68 extending from the second end 67 of the paper tube 63 in direction to the first end 65 is impregnated with the impregnation agent.

Figure 5D illustrates an inclined view from the top on the foil bag 55 with an inserted paper drinking straw 69 of the sixth embodiment. On one bag side 56 of the foil bag 55 a penetration opening 57 is provided that is closed with a foil or the like before the bevelled tip 71 of the paper drinking straw 69 penetrates the penetration opening 57. The region 73 of the bevelled tip 71 and part of the paper tube 70 are impregnated with an impregnation agent. Additionally, the first region 74 extending from the second end 75 of the paper tube 70 in direction to the first end 72 is impregnated with the impregnation agent. Moreover, the second region 76 being an annular ring extending at some distance from the second end 75 in direction to the first end 72 is impregnated with the impregnation agent.

Figure 5E illustrates an inclined view from the top on the beverage carton 48 with inserted paper drinking straw 77 of the seventh embodiment. On the top side 50 of the beverage container 48 the penetration opening 51 is provided that is closed with a foil or the like before the bevelled tip 79 of the paper drinking straw 77 penetrates the penetration opening 51. The first region 81 extending from the second end 82 of the paper tube 78 in direction to the first end 80 is impregnated with the impregnation agent. Other parts of the paper tube 78 are not impregnated with the impregnation agent.

The following figures disclose examples being related to paper drinking straws comprising two straight ends and are not part of the invention.

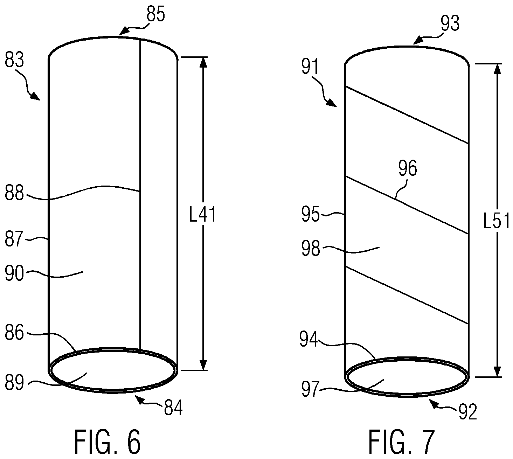

Figure 6 illustrates an inclined view from below on a paper drinking straw 83 before impregnating comprising a paper tube 87 with horizontal winding, and two straight ends 84, 85, also called first end 84 and second end 85. The paper drinking straw 83 might have been cut from an endless paper tube, wherein the endless paper tube has been produced by horizontal winding of at least one paper layer. The cutting edge 86 of the first end 84 is visible in Figure 6. The second end 85 also comprises a cutting edge that is not visible in Figure 6. The paper tube 87 of the paper drinking straw 83 comprises a connection edge 86, where edges of the at least one paper layer firmly adjoin and that extends in a longitudinal direction. The paper tube 87, and thus the paper drinking straw 83 comprise an inner surface 89 pointing to the interior of the paper tube 87/paper drinking straw 83, and an outer surface 90 pointing to the exterior of the paper tube 87/paper drinking straw 83.

For the depicted paper drinking straw, at least one impregnated region of the paper tube 87 may be impregnated with an impregnation agent and at least one region of the paper tube 87 may not be impregnated with the impregnation agent.

Figure 7 illustrates an inclined view from below on a paper drinking straw 91 before impregnating comprising a paper tube 95 with helically winding, and two straight ends 92, 93, also called first end 92 and second end 93. The paper drinking straw 91 might have been cut from an endless paper tube, wherein the endless paper tube has been produced by helically winding of at least one paper layer. The cutting edge 94 of the first end 92 is visible in Figure 7. The second end 93 also comprises a cutting edge that is not visible in Figure 7. The paper tube 95 of the paper drinking straw 91 comprises a connection edge 96 where edges of the at least one paper layer firmly adjoin and that extends helically as depicted. The paper tube 95, and thus the paper drinking straw 91 comprise an inner surface 97 pointing to the interior of the paper tube 95/paper drinking straw 91, and an outer surface 98 pointing to the exterior of the paper tube 95/paper drinking straw 91.

For the depicted paper drinking straw, at least one impregnated region of the paper tube 95 may be impregnated with an impregnation agent and at least one region of the paper tube 95 may not be impregnated with the impregnation agent.

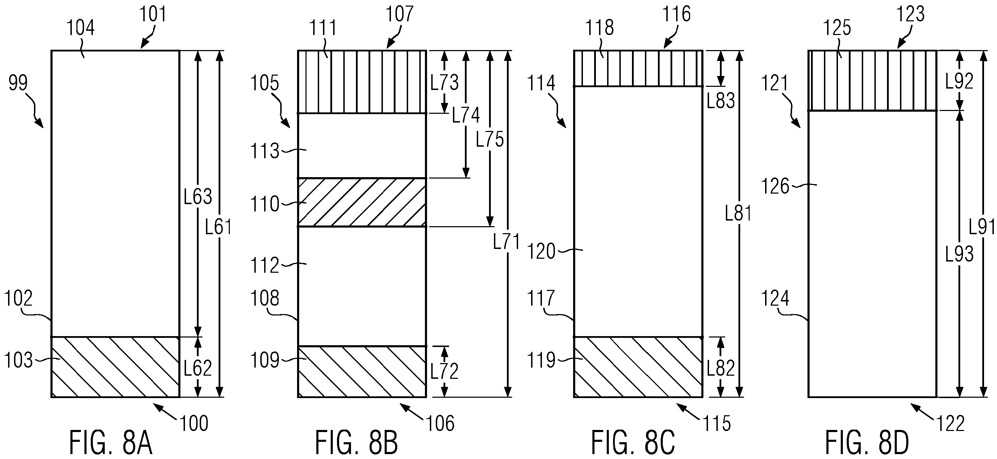

Figures 8A, 8B, 8C, 8D illustrate schematically different examples of paper drinking straws with two straight first end where different parts are impregnated with an impregnating agent.

In Figure 8A, the paper drinking straw 99 comprises an impregnated region 103 ("third impregnated region" in the chapter "Solution" and in the claims) starting form the first end 100 of the paper tube 102 and extending towards the second end 101 of the paper tube 102. The paper drinking straw 99 has a total length L61. The impregnated region 103 starts form the first end 100 and extends towards the second end 101 for a first length L62, and is impregnated with the impregnation agent. Along a remaining length L63, the region 104 of the paper tube 102 extends that is not impregnated with the impregnation agent.

In Figure 8B, the paper drinking straw 105 comprises three impregnated regions 109, 110, 111 that are impregnated with the impregnation agent and two regions 112, 113 that are not impregnated. The paper drinking straw 105 has a total length L71.

The first impregnated region 111 starts from the second end 107 of the paper tube 108 and extends towards the first end 106 of the paper tube 108 for a first length L73 and is impregnated with the impregnation agent.

The second impregnated region 110 starts at a distance L74 from the second end 107 of the paper tube 105 and extends as an annular ring towards the first end 106 of the paper tube 108 and is impregnated with the impregnation agent. The annular ring extends between a distance L74 and a distance L75 form the second end 107 of the paper tube 108.

The third impregnated region 109 starts form the first end 106 of the paper tube 108 and extends towards the second end 107 of the paper tube 108 for a third length L72, and is impregnated with the impregnation agent.

Between the first impregnated region 111 and the second impregnated region 110, a first region 113 extends that is not impregnated with the impregnation agent, and between the second impregnated region 110 and the third impregnated region 109, a second region 112 extends that is not impregnated with the impregnation agent.

In Figure 8C, the paper drinking straw 114 comprises two impregnated regions 118, 119 that are impregnated with the impregnation agent and one region 120 that is not impregnated. The paper drinking straw 114 has a total length L81.

The first impregnated region 118 starts from the second end 116 of the paper tube 117 and extends towards the first end 115 of the paper tube 117 for a first length L83 and is impregnated with the impregnation agent.

The other impregnated region 119 ("third impregnated region" in the chapter "Solution") starts form the first end 115 of the paper tube 117 and extends towards the second end 116 of the paper tube 117 for a second length L82, and is impregnated with the impregnation agent.

Between the two impregnated regions 118, 119, the one region 120 extends that is not impregnated with the impregnation agent.

In Figure 8D, the paper drinking straw 121 with a total length L91 comprises an impregnated region 125 ("first impregnated region" in the chapter "Solution") starting from the second end 123 of the paper tube 124 and extending towards the first end 122 of the paper tube 124 for a first length L92 and being impregnated with the impregnation agent. Along a remaining length L93 towards the first end 122, the region 126 of the paper tube 124 extends that is not impregnated with the impregnation agent.

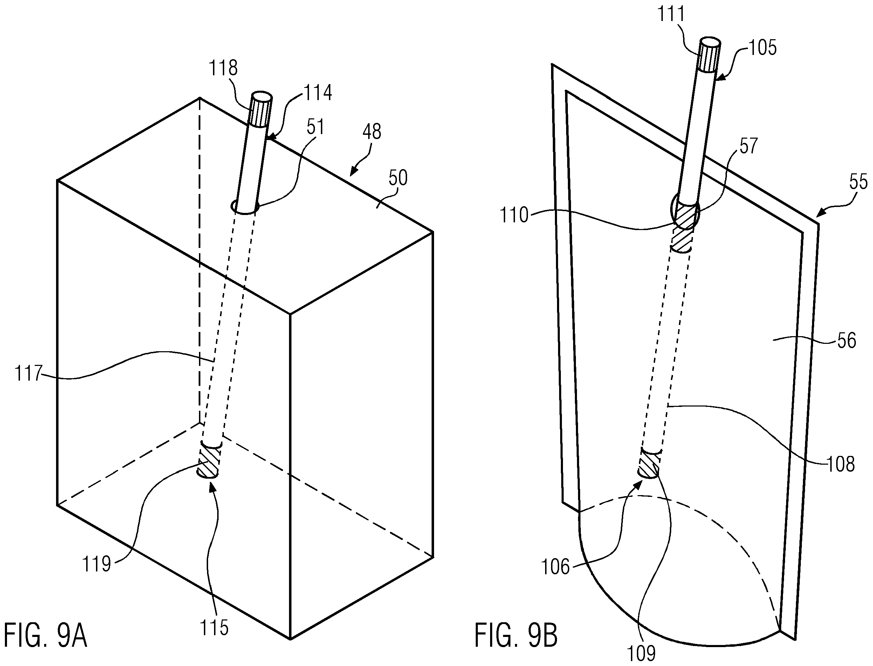

Figure 9A illustrates an inclined view from above on the beverage carton 48 with the inserted paper drinking straw 114 of Figure 8C comprising to two straight ends 115, 116, and the two impregnated regions 118, 119 as mentioned above.

Figure 9B illustrates an inclined view from above on the foil bag 55 with the inserted paper drinking straw 105 of Figure 8B comprising to two straight ends 106, 107, and the three impregnated regions 109, 110, 111 as mentioned above.

## Claims

1. Paper drinking straw (17, 23, 29, 49, 62, 69) comprising a paper tube (1, 9, 18, 24, 30, 63, 70, ) with a first end (2, 10, 21, 27, 33, 65, 72, ) and a second end (3, 11, 22, 28, 34, 67, 75, ), Z wherein at least one impregnated region (20, 26, 32, 66, 73) of the paper tube (1, 9, 18, 24, 30, 63, 70, 78) is impregnated with an impregnation agent and at least one region of the paper tube (1, 9, 18, 24, 30, 63, 70, 78) is not impregnated with the impregnation agent, wherein the first end (2, 10, 21, 27, 33, 65, 72) of the paper tube (1, 9, 18, 24, 30, 63, 70) comprises a bevelled tip (19, 25, 31, 52, 64, 71), wherein the second end (3, 11, 22, 28, 34, 67, 75) of the paper tube (18, 24, 30, 63, 70) comprises a straight end, **characterised in that**
a cutting edge (6, 14) of the bevelled tip (19, 25, 31, 37, 52, 64, 71) is impregnated with the impregnation agent.

2. The paper drinking straw of claim 1, wherein the impregnation agent penetrates into pores and spaces between fibres of the paper.

3. The paper drinking straw of claim 1 or 2, wherein the at least one impregnated region comprises a first impregnated region (68, 74) starting form the second end (67, 75) of the paper tube (63, 70, 78) and extending towards the first end (65, 72, 80) of the paper tube (63, 70, 78) and being impregnated with the impregnation agent, wherein exemplarily the first impregnated region (68, 74, 81) extends for less than 80% or 90% of a total length (L31) of the paper tube (63, 70, 78), and/or
wherein the at least one impregnated region comprises a second impregnated region (76) starting at a distance (Lf2) from a second end (75) of the paper tube (70) and extending as an annular ring towards the first end (72) of the paper tube (70) and being impregnated with the impregnation agent, wherein exemplarily the annular ring has a width of 10% to 25% of a total length (L31) of the paper tube (70), wherein exemplarily the distance (Lf2) is 20% to 50% of the total length (L31) of the paper tube (70),
and/or
wherein the at least one impregnated region comprises a third impregnated region starting form the first end of the paper tube and extending towards the second end of the paper tube and being impregnated with the impregnation agent, wherein exemplarily the third impregnated region extends for less than 80% or 90% of a total length of the paper tube.

4. The paper drinking straw of one of claims 1 to 3, wherein starting from the second end (3, 11, 22, 28, 34, 40) of the paper tube (1, 9, 18, 24, 30, 36) 70%, 80%, 90%, or 100% of a total length (L31) of the paper tube (1, 9, 18, 24, 30, 36) are not impregnated with the impregnation agent, wherein when starting from the second end of the paper tube 100% of the total length of the paper tube are not impregnated with the impregnation agent, a cutting edge at the first end of the paper tube is impregnated with the impregnation agent.

5. The paper drinking straw of one of claims 1 to 4, wherein the impregnation agent comprises one or more of silicate, polymer, resin, wax, adhesive, or latex, wherein exemplarily the impregnation agent comprises sodium silicate, wherein exemplarily the sodium silicate comprises SiO₂3.3/3.5Na₂O, e.g., with 27.5% to 28.5% SiO₂ and 8.1% to 8.5% Na₂O.

6. The paper drinking straw of one of claims 1 to 5, wherein the paper tube (1, 9, 18, 24, 30, 36, 63, 70, 78) comprises a winded paper layer and wherein the impregnation agent is only applied to exposed surface of the paper tube (1, 9, 18, 24, 30, 36, 63, 70), wherein exemplarily the paper tube (1, 9, 18, 24, 30, 36, 63, 70) comprises a paper layer of several layers of paper.

7. The paper straw of one of claims 1 to 6, wherein the bevelled tip (19, 25, 31, 37, 52, 64, 71) is at least partially impregnated with an impregnation agent, wherein exemplarily at least an inner surface (59, 61) and/or an outer surface (58, 60) are impregnated with the impregnation agent, wherein exemplarily regions aside of the bevelled tip (19, 25, 31, 37, 52) are not impregnated with the impregnation agent, wherein exemplarily the bevelled tip (19, 25, 31, 37, 52, 64, 71) is at least partially impregnated with an impregnation agent only after providing the bevelled tip.

8. A beverage container (48, 55) for receiving liquid product and the paper drinking straw (17, 23, 29, 49, 62, 69) of one of claims 1 to 7, wherein the beverage container (48, 55) comprises a penetration opening (51, 57) for introducing the paper drinking straw (17, 23, 29, 49, 62, 69), wherein exemplarily the beverage container (48, 55) is designed as a beverage carton (48), as a foil bag (55) or as a stand-up pouch.

9. A method for producing a paper drinking straw according to one of claims 1 to 7, the method comprising:
providing a raw paper tube;
cutting through the raw paper tube, thereby producing the paper tube (1, 9, 18, 24, 30 63, 70) with the first end and the second end; and
then impregnating the at least one impregnated region (20, 26, 32, 66, 73) with the impregnation agent and not impregnating the at least one region of the paper tube with the impregnation agent.

10. The method of claim 9, wherein the impregnating the at least one impregnated region comprises:
- impregnating a first impregnated region (68, 74) starting form the second end (67, 75) of the paper tube (63, 70) and extending towards the first end (65, 72) of the paper tube (63, 70) with the impregnation agent, wherein exemplarily the first impregnated region (68, 74) extends for less than 80% or 90% of a total length (L31) of the paper tube (63, 70), and/or
- impregnating a second impregnated region (76) starting at a distance (Lf2) from a second end (75) of the paper tube (70) and extending as an annular ring towards the first end (72) of the paper tube (70) with the impregnation agent, wherein exemplarily the annular ring has a width of 10% to 25% of a total length (L31) of the paper tube (70), wherein exemplarily the distance (Lf2) is 20% to 50% of the total length (L31) of the paper tube (70), and/or
- impregnating a third impregnated region starting form the first end of the paper tube and extending towards the second end of the paper tube with the impregnation agent, wherein exemplarily the third impregnated region extends for less than 80% or 90% of a total length of the paper tube.

11. The method of claim 9 or 10, wherein the impregnating the at least one impregnated region comprises:
- impregnating a cutting edge at the first end of the paper tube with the impregnation agent.

12. The method of one of claims 9 to 11, the cutting through being an oblique cutting resulting that the first end comprises a bevelled tip, the method exemplarily further comprising at least partially impregnating the bevelled tip (19, 25, 31, 37, 52, 64, 71) with the impregnation agent, the method exemplarily further comprising impregnating at least an inner surface (59, 61) and/or an outer surface (58, 60) and/or a cutting edge (6, 14) of the bevelled tip (19, 25, 31, 37, 52, 64, 71) with the impregnation agent, the method exemplarily further comprising not impregnating regions aside of the bevelled tip (19, 25, 31, 37, 52) with the impregnation agent, the method exemplarily further comprising impregnating the bevelled tip (19, 25, 31, 37, 52, 64, 71) at least partially with the impregnation agent only after providing the bevelled tip.

13. The method according to one of claims 9 to 12, wherein cutting is done with a cutting knife, wherein the impregnation agent is applied to the cutting knife and wherein the impregnation agent is transferred to the cutting edge during the cutting of the raw paper straw.

14. The method according to one of claims 9 to 13, further comprising solidifying the impregnation agent by hardening or drying, wherein exemplarily solidifying the impregnation agent of the at least partially impregnated bevelled tip (19, 25, 31, 37, 52, 64, 71) and/or solidifying the impregnation agent of the first impregnated region (68, 74) and/or solidifying the impregnation agent of the second region and/or solidifying the impregnation agent of the cutting edge by hardening or drying are performed at the same time or at at least two different times.

## Patentansprüche

1. Papiertrinkhalm (17, 23, 29, 49, 62, 69) umfassend eine Papierröhre (1, 9, 18, 24, 30, 63, 70) mit einem ersten Ende (2, 10, 21, 27, 33, 65, 72) und einem zweiten Ende (3, 11, 22, 28, 34, 67, 75),
wobei zumindest ein imprägnierter Bereich (20, 26, 32, 66, 73) der Papierröhre (1, 9, 18, 24, 30, 63, 70, 78) mit einem Imprägniermittel imprägniert ist und zumindest ein Bereich der Papierröhre (1, 9, 18, 24, 30, 63, 70, 78) nicht mit dem Imprägniermittel imprägniert ist, wobei das erste Ende (2, 10, 21, 27, 33, 65, 72) der Papierröhre (1, 9, 18, 24, 30, 63, 70) eine angeschrägte Spitze (19, 25, 31, 52, 64, 71) umfasst, wobei das zweite Ende (3, 11, 22, 28, 34, 67, 75) der Papierröhre (18, 24, 30, 63, 70) ein gerades Ende umfasst,
**dadurch gekennzeichnet, dass**
eine Schnittkante (6, 14) der angeschrägten Spitze (19, 25, 31, 37, 52, 64, 71) mit dem Imprägniermittel imprägniert ist.

2. Der Papiertrinkhalm nach Anspruch 1, wobei das Imprägniermittel in Poren und Räume zwischen Fasern des Papiers eindringt.

3. Der Papiertrinkhalm nach Anspruch 1 oder 2, wobei der zumindest eine imprägnierte Bereich einen ersten imprägnierten Bereich (68, 74) umfasst, der an dem zweiten Ende (67, 75) der Papierröhre (63, 70, 78) beginnt und sich zu dem ersten Ende (65, 72, 80) der Papierröhre (63, 70, 78) erstreckt und mit dem Imprägniermittel imprägniert ist, wobei beispielsweise der erste imprägnierte Bereich (68, 74, 81) sich über weniger als 80% oder 90% einer Gesamtlänge (L31) der Papierröhre (63, 70, 78) erstreckt,
und/oder
wobei der zumindest eine imprägnierte Bereich einen zweiten imprägnierten Bereich (76) umfasst, der in einem Abstand (Lf2) von einem zweiten Ende (75) der Papierröhre (70) beginnt und sich als ein Kreisring zu dem ersten Ende (72) der Papierröhre (70) erstreckt und mit dem Imprägniermittel imprägniert ist, wobei beispielsweise der Kreisring eine Breite von 10% bis 25% einer Gesamtlänge (L31) der Papierröhre (70) hat, wobei beispielsweise der Abstand (Lf2) 20% bis 50% der Gesamtlänge (L31) der Papierröhre (70) ist,
und/oder
wobei der zumindest eine imprägnierte Bereich einen dritten imprägnierten Bereich umfasst, der an dem ersten Ende der Papierröhre beginnt und sich zu dem zweiten Ende der Papierröhre erstreckt und mit dem Imprägniermittel imprägniert ist, wobei beispielsweise der dritte imprägnierte Bereich sich über weniger als 80% oder 90% einer Gesamtlänge der Papierröhre erstreckt.

4. Der Papiertrinkhalm nach einem der Ansprüche 1 bis 3, wobei beginnend an dem zweiten Ende (3, 11, 22, 28, 34, 40) der Papierröhre (1, 9, 18, 24, 30, 36) 70%, 80%, 90% oder 100% einer Gesamtlänge (L31) der Papierröhre (1, 9, 18, 24, 30, 36) nicht mit dem Imprägniermittel imprägniert sind, wobei, wenn beginnend an dem zweiten Ende der Papierröhre 100% der Gesamtlänge der Papierröhre nicht mit dem Imprägniermittel imprägniert sind, eine Schnittkante des ersten Endes der Papierröhre mit dem Imprägniermittel imprägniert ist.

5. Der Papiertrinkhalm nach einem der Ansprüche 1 bis 4, wobei das Imprägniermittel eines oder mehrere umfasst von Silizium, Polymer, Harz, Wachs, Klebemittel, oder Latex, wobei beispielsweise das Imprägniermittel Natriumsilikat umfasst, wobei beispielsweise das Natriumsilikat SiO₂3,3/3,5Na₂O, beispielsweise mit 27,5% bis 28,5% SiO₂ und 8,1% bis 8,5% Na₂O, umfasst.

6. Der Papiertrinkhalm nach einem der Ansprüche 1 bis 5, wobei die Papierröhre (1, 9, 18, 24, 30, 36, 63, 70, 78) eine gewundene Papierlage umfasst und wobei das Imprägniermittel nur an exponierten Oberflächen der Papierröhre (1, 9, 18, 24, 30, 36, 63, 70) angewendet ist, wobei beispielsweise die Papierröhre (1, 9, 18, 24, 30, 36, 63, 70) eine Papierlage mit mehreren Lagen Papier umfasst.

7. Der Papiertrinkhalm nach einem der Ansprüche 1 bis 6, wobei die angeschrägte Spitze (19, 25, 31, 37, 52, 64, 71) zumindest teilweise mit einem Imprägniermittel imprägniert ist, wobei beispielsweise zumindest eine innere Oberfläche (59, 61) und/oder eine äußere Oberfläche (58, 60) mit dem Imprägniermittel imprägniert sind, wobei beispielsweise Bereiche abseits der angeschrägten Spitze (19, 25, 31, 37, 52) nicht mit dem Imprägniermittel imprägniert sind, wobei beispielsweise die angeschrägte Spitze (19, 25, 31, 37, 52, 64, 71) nur nach dem Vorsehen der angeschrägten Spitze zumindest teilweise mit dem Imprägniermittel imprägniert wird.

8. Ein Getränkebehälter (48, 55) zum Aufnehmen von flüssigem Produkt und der Papiertrinkhalm (17, 23, 29, 49, 62, 69) nach einem der Ansprüche 1 bis 7, wobei der Getränkebehälter (48, 55) eine Eindringöffnung (51, 57) zum Einbringen des Papiertrinkhalms (17, 23, 29, 49, 62, 69) umfasst, wobei beispielsweise der Getränkebehälter (48, 55) als ein Getränkekarton (48), als ein Folienbeutel (55) oder als ein Standbodenbeutel ausgebildet ist.

9. Ein Verfahren zum Herstellen eines Papiertrinkhalms nach einem der Ansprüche 1 bis 7, wobei das Verfahren umfasst:
Bereitstellen eines Papierröhrenrohlings;
Durchschneiden des Papierröhrenrohlings, dabei Erzeugen der Papierröhre (1, 9, 18, 24, 30 63, 70) mit dem ersten Ende und dem zweiten Ende; und
dann Imprägnieren des zumindest einen imprägnierten Bereichs (20, 26, 32, 66, 73) mit dem Imprägniermittel und nicht Imprägnieren des zumindest einen Bereichs der Papierröhre mit dem Imprägniermittel.

10. Das Verfahren nach Anspruch 9, wobei das Imprägnieren des zumindest einen imprägnierten Bereichs umfasst:
- Imprägnieren eines ersten imprägnierten Bereichs (68, 74), der an dem zweiten Ende (67, 75) der Papierröhre (63, 70) beginnt und sich zu dem ersten Ende (65, 72) der Papierröhre (63, 70) erstreckt, mit dem Imprägnierungsmittel, wobei beispielsweise der erste imprägnierte Bereich (68, 74) sich über weniger als 80% oder 90% einer Gesamtlänge (L31) der Papierröhre (63, 70) erstreckt, und/oder
- Imprägnieren eines zweiten imprägnierten Bereichs (76), der im einem Abstand (Lf2) von einem zweiten Ende (75) der Papierröhre (70) beginnt und sich als ein Kreisring zu dem zweiten Ende (72) der Papierröhre (70) erstreckt, mit dem Imprägniermittel, wobei beispielsweise der Kreisring eine Breite von 10% bis 25% einer Gesamtlänge (L31) der Papierröhre (70) hat, wobei beispielsweise der Abstand (Lf2) 20% bis 50% der Gesamtlänge (L31) der Papierröhre (70) ist, und/oder
- Imprägnieren eines dritten imprägnierten Bereichs, der an ersten Ende der Papierröhre beginnt und sich zum zweiten Ende der Papierröhre erstreckt, mit dem Imprägniermittel, wobei beispielsweise sich der dritte imprägnierte Bereich über weniger als 80% oder 90% einer Gesamtlänge der Papierröhre erstreckt.

11. Das Verfahren nach Anspruch 9 oder 10, wobei das Imprägnieren des zumindest einen imprägnierten Bereichs umfasst:
- Imprägnieren einer Schnittkante des ersten Endes der Papierröhre mit dem Imprägniermittel.

12. Das Verfahren nach einem der Ansprüche 9 bis 11, wobei das Durchschneiden ein schräges Schneiden ist, resultierend darin, dass das erste Ende eine angeschrägte Spitze umfasst, wobei das Verfahren beispielsweise weiter ein zumindest teilweises Imprägnieren der angeschrägten Spitze (19, 25, 31, 37, 52, 64, 71) mit dem Imprägniermittel umfasst, wobei das Verfahren beispielsweise weiter ein Imprägnieren zumindest einer inneren Oberfläche (59, 61) und/oder einer äußeren Oberfläche (58, 60) und/oder einer Schnittkante (6, 14) der angeschrägten Spitze (19, 25, 31, 37, 52, 64, 71) mit dem Imprägniermittel umfasst, wobei das Verfahren beispielsweise weiter ein nicht Imprägnieren von Bereichen abseits der angeschrägten Spitze (19, 25, 31, 37, 52) mit dem Imprägniermittel umfasst, wobei das Verfahren beispielsweise weiter ein Imprägnieren der angeschrägten Spitze (19, 25, 31, 37, 52, 64, 71) zumindest teilweise mit dem Imprägniermittel nur nach dem Vorsehen der angeschrägten Spitze umfasst.

13. Das Verfahren nach einem der Ansprüche 9 bis 12, wobei das Schneiden mit einem Schneidmesser gemacht wird, wobei das Imprägniermittel auf das Schneidmesser aufgebracht ist und wobei das Imprägniermittel an die Schneidkante während des Schneidens des Papierröhrenrohlings übertragen wird.

14. Das Verfahren nach einem der Ansprüche 9 bis 13, weiter umfassend Aushärten des Imprägniermittels durch Aushärten oder Trocknen, wobei beispielsweise Aushärten des Imprägniermittels der zumindest teilweise imprägnierten angeschrägten Spitze (19, 25, 31, 37, 52, 64, 71) und/oder Aushärten des Imprägniermittels des ersten imprägnierten Bereichs (68, 74) und/oder Aushärten des Imprägniermittels des zweiten Bereichs und/oder Aushärten des Imprägniermittels der Schnittkante durch Aushärten oder Trocknen zu der gleichen Zeit oder zu zumindest zwei verschiedenen Zeiten durchgeführt wird.

## Revendications

1. Paille en papier (17, 23, 29, 49, 62, 69) comprenant un tube en papier (1, 9, 18, 24, 30, 63, 70,) avec une première extrémité (2, 10, 21, 27, 33, 65, 72) et une deuxième extrémité (3, 11, 22, 28, 34, 67, 75), dans laquelle
au moins une zone imprégnée (20, 26, 32, 66, 73) du tube en papier (1, 9, 18, 24, 30, 63, 70, 78) est imprégnée d'un agent d'imprégnation et au moins une zone du tube en papier (1, 9, 18, 24, 30, 63, 70, 78) n'est pas imprégnée de l'agent d'imprégnation, dans laquelle la première extrémité (2, 10, 21, 27, 33, 65, 72) du tube en papier (1, 9, 18, 24, 30, 63, 70) comprend une pointe biseautée (19, 25, 31, 52, 64, 71), dans laquelle la deuxième extrémité (3, 11, 22, 28, 34, 67, 75) du tube en papier (18, 24, 30, 63, 70) comprend une extrémité droite,
**caractérisée en ce que**
une arête coupante (6, 14) de la pointe biseautée (19, 25, 31, 37, 52, 64, 71) est imprégnée de l'agent d'imprégnation.

2. La paille en papier de la revendication 1, dans laquelle l'agent d'imprégnation pénètre dans des pores et des espaces entre des fibres du papier.

3. La paille en papier de la revendication 1 ou 2, dans laquelle l'au moins une zone imprégnée comprend une première zone imprégnée (68, 74) commençant à la deuxième extrémité (67, 75) du tube en papier (63, 70, 78) et s'étendant vers la première extrémité (65, 72, 80) du tube en papier (63, 70, 78) et étant imprégnée de l'agent d'imprégnation, dans laquelle à titre d'exemple la première zone imprégnée (68, 74, 81) s'étend sur moins de 80 % ou 90 % d'une longueur totale (L31) du tube en papier (63, 70, 78), et/ou
dans laquelle l'au moins une zone imprégnée comprend une deuxième zone imprégnée (76) commençant à une distance (Lf2) d'une deuxième extrémité (75) du tube en papier (70) et s'étendant comme une bague annulaire vers la première extrémité (72) du tube en papier (70) et étant imprégnée de l'agent d'imprégnation, dans laquelle à titre d'exemple la bague annulaire présente une largeur de 10 % à 25 % d'une longueur totale (L31) du tube en papier (70), dans laquelle à titre d'exemple la distance (Lf2) est de 20 % à 50 % de la longueur totale (L31) du tube en papier (70),
et/ou
dans laquelle l'au moins une zone imprégnée comprend une troisième zone imprégnée commençant à la première extrémité du tube en papier et s'étendant vers la deuxième extrémité du tube en papier et étant imprégnée de l'agent d'imprégnation, dans laquelle à titre d'exemple la troisième zone imprégnée s'étend sur moins de 80 % ou 90 % d'une longueur totale du tube en papier.

4. La paille en papier de l'une des revendications 1 à 3, dans laquelle en commençant à la deuxième extrémité (3, 11, 22, 28, 34, 40) du tube en papier (1, 9, 18, 24, 30, 36) 70 %, 80 %, 90 % ou 100 % d'une longueur totale (L31) du tube en papier (1, 9, 18, 24, 30, 36) ne sont pas imprégnés de l'agent d'imprégnation, dans laquelle en commençant à la deuxième extrémité du tube en papier 100 % de la longueur totale du tube en papier ne sont pas imprégnés de l'agent d'imprégnation, une arête coupante à la première extrémité du tube en papier est imprégnée de l'agent d'imprégnation.

5. La paille en papier de l'une des revendications 1 à 4, dans laquelle l'agent d'imprégnation comprend un ou plusieurs de silicate, polymère, résine, cire, adhésif ou latex, dans laquelle à titre d'exemple l'agent d'imprégnation comprend du silicate de sodium, dans laquelle à titre d'exemple le silicate de sodium comprend du SiO₂3,3/3,5Na₂O, par exemple, avec 27,5 % à 28,5 % de SiO₂ et 8,1 % à 8,5 % de Na₂O.

6. La paille en papier de l'une des revendications 1 à 5, dans laquelle le tube en papier (1, 9, 18, 24, 30, 36, 63, 70, 78) comprend une couche de papier enroulée et dans laquelle l'agent d'imprégnation est uniquement appliqué à une surface exposée du tube en papier (1, 9, 18, 24, 30, 36, 63, 70), dans laquelle à titre d'exemple le tube en papier (1, 9, 18, 24, 30, 36, 63, 70) comprend une couche de papier de plusieurs couches de papier.

7. La paille en papier de l'une des revendications 1 à 6, dans laquelle la pointe biseautée (19, 25, 31, 37, 52, 64, 71) est au moins partiellement imprégnée d'un agent d'imprégnation, dans laquelle à titre d'exemple au moins une surface intérieure (59, 61) et/ou une surface extérieure (58, 60) sont imprégnées de l'agent d'imprégnation, dans laquelle à titre d'exemple des zones à part de la pointe biseautée (19, 25, 31, 37, 52) ne sont pas imprégnées de l'agent d'imprégnation, dans laquelle à titre d'exemple la pointe biseautée (19, 25, 31, 37, 52, 64, 71) est au moins partiellement imprégnée d'un agent d'imprégnation uniquement après fourniture de la pointe biseautée.

8. Un conteneur à boisson (48, 55) pour recevoir un produit liquide et la paille en papier (17, 23, 29, 49, 62, 69) de l'une des revendications 1 à 7, dans lequel le conteneur à boisson (48, 55) comprend une ouverture de pénétration (51, 57) pour introduire la paille en papier (17, 23, 29, 49, 62, 69), dans lequel à titre d'exemple le conteneur de boisson (48, 55) est conçu comme un carton à boisson (48), comme un sachet (55) ou comme une poche tenant debout.

9. Procédé pour produire une paille en papier selon l'une des revendications 1 à 7, le procédé comprenant :
une fourniture d'un tube en papier brut ;
une coupe à travers le tube en papier brut, produisant ainsi le tube en papier (1, 9, 18, 24, 30, 63, 70) avec la première extrémité et la deuxième extrémité ; et
ensuite une imprégnation de l'au moins une zone imprégnée (20, 26, 32, 66, 73) avec l'agent d'imprégnation et une non-imprégnation de l'au moins une zone du tube en papier avec l'agent d'imprégnation.

10. Le procédé de la revendication 9, dans lequel l'imprégnation de l'au moins une zone imprégnée comprend :
- une imprégnation d'une première zone imprégnée (68, 74) commençant à la deuxième extrémité (67, 75) du tube en papier (63, 70) et s'étendant vers la première extrémité (65, 72) du tube en papier (63, 70) avec l'agent d'imprégnation, dans lequel à titre d'exemple la première zone imprégnée (68, 74) s'étend sur moins de 80 % ou 90 % d'une longueur totale (L31) du tube en papier (63, 70), et/ou
- une imprégnation d'une deuxième zone imprégnée (76) commençant à une distance (Lf2) d'une deuxième extrémité (75) du tube en papier (70) et s'étendant comme une bague annulaire vers la première extrémité (72) du tube en papier (70) avec l'agent d'imprégnation, dans lequel à titre d'exemple la bague annulaire présente une largeur de 10 % à 25 % d'une longueur totale (L31) du tube en papier (70), dans lequel à titre d'exemple la distance (Lf2) est de 20 % à 50 % de la longueur totale (L31) du tube en papier (70), et/ou
- une imprégnation d'une troisième zone imprégnée commençant à la première extrémité du tube en papier et s'étendant vers la deuxième extrémité du tube en papier avec l'agent d'imprégnation, dans lequel à titre d'exemple la troisième zone imprégnée s'étend sur moins de 80 % ou 90 % d'une longueur totale du tube en papier.

11. Le procédé de la revendication 9 ou 10, dans lequel l'imprégnation de l'au moins une zone imprégnée comprend :
une imprégnation d'une arête coupante à la première extrémité du tube en papier avec l'agent d'imprégnation.

12. Le procédé de l'une des revendications 9 à 11, la coupe traversante étant une coupe oblique résultant en ce que la première extrémité comprend une pointe biseautée, le procédé à titre d'exemple comprenant en outre au moins partiellement une imprégnation de la pointe biseautée (19, 25, 31,37, 52, 64, 71) avec l'agent d'imprégnation, le procédé à titre d'exemple comprenant en outre une imprégnation d'au moins une surface intérieure (59, 61) et/ou d'une surface extérieure (58, 60) et/ou d'une arête coupante (6, 14) de la pointe biseautée (19, 25, 31, 37, 52, 64, 71) avec l'agent d'imprégnation, le procédé à titre d'exemple comprenant en outre une non-imprégnation de zones à part de la pointe biseautée (19, 25, 31, 37, 52) avec l'agent d'imprégnation, le procédé à titre d'exemple comprenant en outre une imprégnation de la pointe biseautée (19, 25, 31, 37, 52, 64, 71) au moins partiellement avec l'agent d'imprégnation uniquement après fourniture de la pointe biseautée.

13. Le procédé selon l'une des revendications 9 à 12, dans lequel une coupe est effectuée avec un couteau coupant, dans lequel l'agent d'imprégnation est appliqué au couteau coupant et dans lequel l'agent d'imprégnation est transféré à l'arête coupante lors de la coupe de la paille en papier brut.

14. Le procédé selon l'une des revendications 9 à 13, comprenant en outre une solidification de l'agent d'imprégnation par durcissement ou séchage, dans lequel à titre d'exemple une solidification de l'agent d'imprégnation de l'au moins partiellement imprégnée pointe biseautée (19, 25, 31, 37, 52, 64, 71) et/ou une solidification de l'agent d'imprégnation de la première zone imprégnée (68, 74) et/ou une solidification de l'agent d'imprégnation de la deuxième zone et/ou une solidification de l'agent d'imprégnation de l'arête coupante par durcissement ou séchage sont effectuées simultanément ou à au moins à deux moments distincts.
